(19) Europäisches Patentamt
European Patent Office
Office européen des brevets

(11) EP 2 086 744 B1

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(21) Anmeldenummer: **07819637.5**

(22) Anmeldetag: **07.11.2007**

(51) Int Cl.:
*B29L 31/34* *(2006.01)*       *B29C 47/92* *(2006.01)*
*H01B 13/14* *(2006.01)*       *H01B 13/24* *(2006.01)*
*B29C 47/00* *(2006.01)*       *B29C 47/08* *(2006.01)*

(86) Internationale Anmeldenummer:
**PCT/EP2007/009623**

(87) Internationale Veröffentlichungsnummer:
**WO 2008/067885 (12.06.2008 Gazette 2008/24)**

(54) **VERFAHREN ZUM BETRIEB EINER PRODUKTIONSANLAGE ZUR HERSTELLUNG EINES STRANGES**

METHOD FOR THE OPERATION OF A PRODUCTION PLANT TO PRODUCE AN EXTRUDATE

PROCÉDÉ DE CONDUITE D'UNE INSTALLATION DE PRODUCTION DESTINÉ À FABRIQUER UN BARREAU

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **04.12.2006 DE 102006058754**

(43) Veröffentlichungstag der Anmeldung:
**12.08.2009 Patentblatt 2009/33**

(73) Patentinhaber: **SIKORA AG**
**28307 Bremen (DE)**

(72) Erfinder:
• **SIKORA, Harald**
**28357 Bremen (DE)**
• **LAMPE, Siegmar**
**28207 Bremen (DE)**

(74) Vertreter: **Hauck Patentanwaltspartnerschaft mbB**
**Postfach 11 31 53**
**20431 Hamburg (DE)**

(56) Entgegenhaltungen:
**EP-A- 0 507 988      EP-A- 0 635 851**
**US-A- 4 068 615**

**Beschreibung**

Die Erfindung bezieht sich auf ein Verfahren nach dem Patentanspruch 1.

Kabel werden üblicherweise in der Form hergestellt, daß ihr Leiter (Kern) durch einen Extruder gezogen wird, der auf den Leiter mindestens eine Isolationsschicht aufbringt, die aus einem geeigneten Kunststoffmaterial besteht. Nach dem Extrudieren wird das Kabel oder der Strang durch eine Kühlstrecke oder eine Vulkanisations- oder Trockenvernetzungsstrecke geleitet. Zum Beispiel aus Gründen der Isolationsfestigkeit muß die Ummantelung eine Mindestwanddicke aufweisen. Andererseits wird aus Materialersparnis- oder Gewichtsgründen vermieden, die Wanddicke unnötig groß zu machen. Es ist daher erforderlich, die Wanddicke oder den Durchmesser eines Kabels oder Stranges ständig zu überwachen und Maßnahmen vorzusehen, welche bei Über- oder Unterschreiten der vorgegebenen Werte eine Korrektur vornehmen.

Es ist bekannt, bei Anlagen zur Herstellung von Kabeln ein Außendurchmesser-Meßgerät in Produktionsrichtung in geringer Entfernung nach dem Extruder anzuordnen. Diese Anordnung hat den Vorteil, dass sie beim Einrichten der Extrusionsanlage dem Bediener sofort Messwerte liefert und eine schnelle Regelung zuläßt. Nachteilig ist hingegen, daß die Anordnung eines Meßgerätes zwischen dem Extruder und der Vernetzung- bzw. Kühlstrecke gerade an dieser Stelle aus verschiedenen Gründen unerwünscht ist. Es ist daher auch bekannt, eine Durchmesser-Meßvorrichtung hinter der Kühlstrecke anzuordnen. Diese hat den Nachteil, daß nur eine sehr langsame Regelung erzielt wird. Aus EP 0 400 310 A2 ist bekannt, eine erste Durchmesser-Meßvorrichtung zwischen Extruder und Kühlstrecke und eine zweite Meßvorrichtung hinter der Kühlstrecke anzuordnen. Der Meßwert der ersten Meßvorrichtung wird über einen Laufzeitspeicher auf eine erste Vergleichseinrichtung gegeben, in welche auch der Meßwert der zweiten Meßvorrichtung eingegeben wird. Die Differenz wird auf eine zweite Vergleichsvorrichtung gegeben, welche sowohl vom ersten Meßwert als auch von einem Durchmesser-Sollwert gespeist wird. Die Differenz geht als Regelabweichung auf einen Regler für die Anlage. Dieser regelt z.B. die Drehzahl des Extruders.

Es ist auch bekannt, die Wanddicke einer Ummantelung eines Kabels zu messen. Wenn nachfolgend von einer Ummantelung gesprochen wird, dann wird der Einfachheit halber eine einschichtige Ummantelung unterstellt. Es versteht sich, daß die Isolation eines Kabels auch aus mehreren Schichten aufgebaut sein kann, die durch Koextrusion oder mittels mehrerer hintereinander angeordneter Extruder erzeugt werden. Außerdem ist bekannt, Halbleiterschichten durch Extrusion auf den Leiter bzw. auf die äußere Isolationsschicht aufzubringen.

Für eine Wanddickenmessung bietet sich ein Röntgenmeßgerät an, mit dem es möglich ist, die Dicke der einzelnen Schichten einer Ummantelung und den Durchmesser des Kerns zu ermitteln. Es ist jedoch auch möglich, die Dicke einer Schicht einer Ummantelung nur durch eine Durchmessermessung zu bestimmen, wenn zugleich der Durchmesser des Kerns als bekannt vorausgesetzt oder z.B. in Fertigungsrichtung vor dem Extruder gemessen wird. Um Schwankungen im Durchmesser des Leiters (Kerndurchmesser) zu berücksichtigen, ist ferner bekannt, die gemessenen Durchmesserwerte des Leiters über einen Laufzeitspeicher mit dem Außendurchmesser-Meßwert zu vergleichen, damit die Differenz von Außendurchmesser und Kerndurchmesser dem gleichen Ort am Kabel zugrunde gelegt werden kann.

Bei gegebenem Kerndurchmesser hängt die Wanddicke einer Ummantelung von der Ausstoßleistung eines Extruders und der sogenannten Liniengeschwindigkeit ab. Die Ausstoßleistung hängt in erster Linie von der Drehzahl des Extruders (Schneckendrehzahl) ab. Die Liniengeschwindigkeit wird von den Antrieben, die den Leiter von einer Trommel abziehen und das Kabel durch den Extruder und die Kühlstrecke zu einer Aufwickeltrommel ziehen, vorgegeben. Die Wanddicke ergibt sich mithin nach der folgenden Formel:

$$W_V = \frac{1}{2} \cdot \left( \sqrt{D_{Core}^2 + \frac{4}{\pi} \cdot \frac{\dot{P}_{ex}(n_{ex})}{v_L \cdot \rho}} - D_{Core} \right)$$

Darin ist

$W_v$ = Wanddicke
$P_{ex}$ = Ausstoßleistung des Extruders
$n_{ex}$ = Extruderdrehzahl
$v_L$ = Liniengeschwindigkeit

$D_{Core}$ = Durchmesser des Leiters (Kern)
$\rho$ = Spezifisches Gewicht

$$\dot{V}_{ex} = \frac{\dot{P}_{ex}(n_{ex})}{\rho} = \text{Volumenausstoßleistung des}$$

Extruders

Wie schon erwähnt, ist bekannt, eine Wanddickeneinstellung vorzusehen, indem der Istwert für die Wanddicke nach der Kühlstrecke gemessen wird, beispielsweise mit einem Röntgengerät, und der Istwert mit einem vorgegebenen Wanddicken-Sollwert verglichen wird. Ein PI-Regler gibt eine entsprechende Stellgröße auf den Extruder, beispielsweise zur Änderung seiner Schneckendrehzahl. Damit ändert sich auch sein Ausstoßvolumen und somit die Wanddicke der Ummantelung. Da Kühlstrecken eine große Länge aufweisen können, z.B. hundert Meter und mehr, ist eine derartige Regelung naturgemäß langsam, besonderes bei der Produktion von Kabeln mit großem Querschnitt der Ummantelung, die bei maximaler Ausstoßleistung des Extruders mit z.B. Liniengeschwindigkeiten von 10 bis 100 m pro Minute extrudiert werden. Die Regelung könnte schneller gemacht werden, wenn ein WanddickenMeßgerät unmittelbar hinter dem Extruder angeordnet werden würde. Dies ist aus verschiedenen Gründen unerwünscht.

Rohre oder Schläuche aus Kunststoff werden ebenfalls mit einem Extruder hergestellt. Auch bei Produktionsanlagen für derartiges Strangmaterial können Messvorrichtungen häufig nicht unmittelbar im Anschluß an den Extruder aufgestellt werden, was aus messtechnischen Gründen an sich erwünscht ist.

Aus EP 0 635 851 A2 ist ein Verfahren zur Herstellung eines mit einer Kunststoffisolationsschicht bestimmter Dicke ummantelten elektrischen Leiters bekannt. Dabei werden während des Hochfahrens der Extrusionslinie auf die gewünschte Liniengeschwindigkeit die Extrusions- und Liniengeschwindigkeiten basierend auf dem in der Messvorrichtung gemessenen Außendurchmesser erhöht.

Aus JP 62 177 810 A ist ebenfalls ein Verfahren zum Hochfahren einer Produktionsanlage zur Herstellung eines mit einer Kunststoffisolationsschicht bestimmter Dicke ummantelten elektrischen Leiters bekannt. Dabei wird zu Produktionsbeginn in Abhängigkeit von dem Kerndurchmesser des elektrischen Leiters, der Liniengeschwindigkeit und des Soll-Außendurchmessers der Isolationsschicht die erforderliche Schneckendrehzahl des Extruders errechnet und eingestellt. Bis das Extrudat den stromabwärts liegenden Durchmesser-Meßkopf erreicht, wird mit Hilfe von Schieberegistern in regelmäßigen Abständen auf Grundlage der momentanen Werte für die Liniengeschwindigkeit, die Schneckendrehzahl und den Kerndurchmesser jeweils ein prognostizierter Außendurchmesser der Isolationsschicht ermittelt. Wenn das Extrudat den Durchmesser-Meßkopf erreicht, werden die prognostizierten und tatsächlich gemessenen Werte des Außendurchmessers verglichen. Weichen diese voneinander ab, werden die Parameter für die Berechnung der Schneckendrehzahl des Extruders und des prognostizierten Außendurchmessers entsprechend angepasst.

Der Erfindung liegt die Aufgabe zugrunde, ein Verfahren zum Betrieb einer Produktionsanlage die Herstellung eines Strangs, insbesondere für Kabel anzugeben, mit dem der Außendurchmesser und/oder die Wanddicke mindestens einer Schicht des Strangs bzw. der Ummantelung des Kabels schneller als herkömmlich auf den gewünschten Nennwert gebracht werden kann, obwohl eine Messung des Durchmessers bzw. der Wanddicke unmittelbar hinter dem Extruder entfällt.

Diese Aufgabe wird durch die Merkmale des Patentanspruchs 1 gelöst.

Die Erfindung löst die Aufgabe insbesondere durch ein Verfahren zum Betrieb einer Produktionsanlage zur Herstellung eines Stranges, bei dem in mindestens einem in seiner Schneckendrehzahl veränderbaren Extruder mindestens eine Schicht des Stranges aus Kunststoff extrudiert wird, wobei die Liniengeschwindigkeit des Stranges veränderbar ist und bei dem ferner der Durchmesser und/oder die Wanddicke der Schicht im Abstand vom Extruder mit einem Meßkopf gemessen wird, gekennzeichnet durch folgende Schritte:

- in einem Rechner wird für ein Extrudermodell ein Algorithmus gespeichert, mit dem Durchmesserwerte und/oder Wanddickenwerte der Schicht unter Berücksichtigung der nichtlinearen drehzahlabhängigen Ausstoßleistung des zum Einsatz kommenden spezifischen Extruders, des Innendurchmessers der Schicht und der Liniengeschwindigkeit berechnet werden,

- das gespeicherte Extrudermodell wird aus dem Volumenausstoß durch Messung der Wanddicke und/oder des Durchmessers eines Stranges, der Extruderdrehzahl der Liniengeschwindigkeit und des Innendurchmessers der Schicht gebildet,

- bei Produktionsbeginn des Stranges wird zunächst mit Hilfe des Extrudermodells der vom Extruder vorhersehbar erzeugte Wert für Durchmesser und/oder Wanddicke errechnet in Abhängigkeit von den Werten für den Innendurchmesser die Liniengeschwindigkeit, die Schneckendrehzahl des Extruders und die drehzahlabhängigen Daten für die

Ausstoßleistung des Extruders,

- der errechnete, vorhersehbare Wert für Durchmesser- und/oder Wanddicke wird angezeigt und

- durch Änderung der Schneckendrehzahl des Extruders und/oder der Liniengeschwindigkeit mittels Handbetätigung oder Regelung wird der errechnete und angezeigte Wert für Durchmesser und/oder Wanddicke auf einen Sollwert für Durchmesser und/oder Wanddicke gebracht.

Bei dem erfindungsgemäßen Verfahren wird in einem Rechner ein Modell des Extruders gespeichert. Jeder Extruder ist gekennzeichnet durch die Abhängigkeit seiner Ausstoßvolumenleistung (Ausstoßvolumen pro Zeiteinheit) von seiner Schneckendrehzahl. Das Verhältnis von Drehzahl zur Ausstoßvolumenleistung ist nicht durchgehend linear, läßt sich jedoch durch eine Funktion darstellen. Wird ein z.B. Leiter mit vorgegebenem Durchmesser in einem Extruder mit vorgegebener Drehzahl und Liniengeschwindigkeit beschichtet, ergibt sich eine prognostizierbare Wanddicke. Die beschriebenen Variablen, wie Wanddicke und/oder Durchmesser, Extruderdrehzahl, Liniengeschwindigkeit, Innendurchmesser und/oder Kerndurchmesser werden gemessen und in einem Algorithmus abgebildet, der in der Software des Rechners abgelegt wird.

Die Volumenausstoßleistung eines Extruders ist ferner vom Material, von der Temperatur des Materials (Massetemperatur) und von der Leistung des Antriebs des Extruders abhängig. Die Temperatur und/oder die Antriebsleistung können naturgemäß gemessen werden, letztere z.B. über die Stromaufnahme des Antriebsmotors.

Bei der Herstellung eines Stranges, z.B. eines Kabels weiß der Linienführer, welcher Wanddickenwert für die Schichtwand bzw. für die Ummantelung des Kabels erzielt werden soll. Der zu erzielende Wanddickenwert ergibt sich bei einem vorhandenen Kerndurchmesser und den eingestellten Geschwindigkeiten für die Linie und der Drehzahl der Extruderschnecke und den weiteren, oben erwähnten Parametern. Fehlt ein Kern, kann der Innendurchmesser der Schicht anderweitig vorgegeben werden. Wird beim Anfahren der Produktionsanlage die Liniengeschwindigkeit um einen bestimmten prozentualen Betrag erhöht, muß der Linienführer die Drehzahl des Extruders entsprechend hochfahren, um die gewünschte Wanddicke zu erzielen. Aufgrund der Nichtlinearität des Extruders muß zur Einhaltung der zu erzielenden Wanddicke die Extruderdrehzahl um einen gewissen größeren prozentualen Betrag erhöht werden. Mit Hilfe des Extrudermodells kann der jeweils erreichte Wanddickenwert sofort errechnet und angezeigt werden, auch während des Hochlaufbetriebs. Dieser Wanddickenwert ergibt sich aus dem im Extrudermodell ausgedrückten Algorithmus, anhand dessen in Abhängigkeit von den Produktionsdaten des Extruders, der Liniengeschwindigkeit und des Innen- bzw. Kerndurchmessers die jeweilige Wanddicke errechnet wird, die sich bekanntlich vor allem mit dem Drehzahlwert des Extruders ändert. Mit Hilfe des Extrudermodells kann daher vom Linienführer in schnellstmöglicher Zeit auf den Wanddickenwert gefahren werden, der ihm als Nennwert vorgegeben ist. Dies geschieht entweder durch Handbetätigung zur Einstellung der Drehzahl (Schneckendrehzahl) des Extruders oder auch alternativ mit Hilfe einer geeigneten Steuerung und Regelung, welche dafür sorgt, daß der Extruder so angesteuert und geregelt wird, daß der errechnete Wert dem Nennwert entspricht bzw. der Nennwert nach einem Regelverfahren erzielt wird.

Noch vor dem Hochfahren der Anlage auf Produktionsgeschwindigkeit kann erfindungsgemäß auf Automatikbetrieb umgeschaltet werden. Für diesen ist erfindungsgemäß vorgesehen, den Algorithmus eines (inversen) Extrudermodells im Rechner zu speichern, aus dem sich die Relation der Drehzahl des Extruders zum Wert für den Durchmesser und/oder die Wanddicke nach Maßgabe des Innen- bzw. Kerndurchmessers, der Liniengeschwindigkeit und der drehzahlabhängigen Ausstoßleistung des Extruders ergibt. Der Extruder wird mit einer Soll-Drehzahl gesteuert, die im (inversen) Extrudermodell für die vorgegebenen Werte von Wanddicke und/oder Durchmesser, Liniengeschwindigkeit und Innen- bzw. Kerndurchmesser errechnet wird. Mit dem Start des Automatikbetriebes wird der Extruder mit der errechneten Soll-Drehzahl gesteuert, so daß mithin eine Wanddicke erzeugt wird, die aufgrund der Errechnung im Extrudermodell der Nenn-Wanddicke weitgehend entspricht, ohne daß hierfür eine Messung vorgenommen wurde. Diese kann erst stattfinden, wenn der Ausstoß mit der prognostizierten Wanddicke den Meßkopf im größeren Abstand zum Extruder erreicht hat. Der Meßkopf mißt den Istwert für den Durchmesser und/oder die Wanddicke der Schicht bzw. Umhüllung. Wegen der weitgehenden Annäherung der mit Hilfe des Extrudermodells errechneten Wanddicke an die Nenn-Wanddicke bzw. den Nenn-Durchmesser ist die Differenz zwischen Ist- und Sollwert relativ gering. Die Abweichung oder Differenz wird dazu verwendet, den Extruder genauer auf den gewünschten Wert für Durchmesser oder Wanddicke einzustellen. Dies kann wahlweise über eine Regelung oder durch Adaption (Berichtigung) des Extrudermodells erfolgen nach Maßgabe der Meßwerte vom Meßkopfs. Bei einer Regelung wird z.B. die gemessene Wanddicke mit der prognostizierten Wanddicke verglichen, wobei wesentlich ist, daß der vorhersehbare bzw. vorausberechnete Wanddickenwert am Ort des Meßkopfs mit dem Meßwert des Meßkopfs verglichen wird. Dies geschieht etwa dadurch, daß der im Extrudermodell errechnete Wanddickenwert über ein Schieberegister auf eine Vergleichsvorrichtung gegeben wird, in welche auch der gemessene Wanddickenwert eingegeben wird. Beim "ortsgleichen" Vergleich sind nach Möglichkeit weitere prozeßrelevante Daten wie Drehzahl der Extruderschnecke, Abzugsgeschwindigkeit usw. zu berücksichtigen. Denn diese können sich in der Zeit, in der der Strang bzw. das Kabel die Strecke zwischen Extruder und Meßkopf zurückgelegt hat, mehr oder weniger signifikant geändert haben. Sie werden daher kontinuierlich einem Speicher ähnlich einem Laufzeitspeicher zugeführt. Die Laufzeit der Information entspricht der Liniengeschwindigkeit, so daß diese zeitlich richtig mit dem Strang bzw. dem Kabel am Ort des Meßkopfs eintreffen. Dadurch kann der Istwert der Wanddicke oder des Durchmessers ortsrichtig mit den vorher errechneten Werten und den Basisdaten, auf denen die errechneten Werte beruhen, verglichen werden um ein Fehlersignal abzuleiten. Das Fehlersignal bewirkt eine Korrektur des Extrudermodells und/oder der Sollwertvorgaben für die Extruderdrehzahl und/oder der Liniengeschwindigkeit.

Bei dem erfindungsgemäßen Verfahren wird davon ausgegangen, daß das Extrudermodell eine relativ genaue Annäherung an die tatsächlichen Produktionswerte (Ausstoßleistung) des zum Einsatz kommenden spezifischen Extruders darstellt. Beim erfindungsgemäßen Verfahren wird daher die Drehzahl des Extruders, die bei bekannter Ausstoßleistung, gegebenem Innen- bzw. Kerndurchmesser und gegebener Liniengeschwindigkeit sowie weiterer oben erwähnter Basisdaten die gewünschte Wanddickenwerte ergeben soll, zunächst durch rechnerische Annäherung gewonnen. Eine Überprüfung und Korrektur erfolgt mit Hilfe von tatsächlichen Meßwerten, welche über den Meßkopf im Abstand zum Extruder, z.B. am Ende der Kühlstrecke, gewonnen werden. Das erfindungsgemäße Verfahren hat den Vorteil, daß zu Beginn der Produktion durch Vorgabe der Extruderdrehzahl aus dem Extrudermodell die Wanddicke auf einen Wert gesteuert werden kann, welcher nur mit minimalem Fehler behaftet ist. Eine Feineinstellung erfolgt im Anschluß mit Hilfe der Meßwerte des Meßkopfs. Mit anderen Worten, das erfindungsgemäße Verfahren arbeitet so als würde zwischen Extruder und Kühlstrecke ein Meßkopf (virtueller Meßkopf) angeordnet sein, der direkt die Kaltwanddicke anzeigt, was in Wirklichkeit nicht der Fall ist. Der virtuelle Meßkopf gibt für jede Liniengeschwindigkeit die Soll-Drehzahl für die Wanddicken- und/oder Durchmessersteuerung vor. Der Meßkopf hinter der Kühlstrecke ermittelt den Istwert, mit dem die Soll-Drehzahl des Extrudermodells angepaßt wird. Dies geschieht z.B. durch Adaption des Extrudermodells oder auf regelungstechnischem Wege durch Vergleich des gemessenen Istwerts der Wanddicke mit dem Wanddicken-Sollwert. Der Regelungsanteil bei der erfindungsgemäßen Einstellung des Extruders ist klein. Daher fällt die Totzeit der Regelstrecke nicht sonderlich ins Gewicht.

Es versteht sich, daß für die Anwendung des Extrudermodells die Parameter des Extruders, insbesondere seine Drehzahl, die Liniengeschwindigkeit des Stranges sowie der Innendurchmesser bzw. die Dicke des Kerns, und gegebenenfalls das Material, seine Temperatur und der Massedruck im Extruder bekannt sein müssen und gegebenenfalls durch geeignete Meßvorrichtungen zu messen sind.

Es versteht sich auch, dass die Anwendung des Extrudermodells ebenso funktioniert, wenn an Stelle des Sollwertes für die Schneckendrehzahl des Extruders der Sollwert der Liniengeschwindigkeit prognostiziert und/oder bei Abweichungen vom Sollwert der Wanddicke und/oder des Durchmessers entsprechend adaptiert, korrigiert oder geregelt wird.

Wird im Betrieb z.B. die Drehzahl des Extruders signifikant verringert oder erhöht, weil z.B. die Vorratstrommel für den Leiter bei der Kabelherstellung gewechselt werden muß, muß naturgemäß dafür gesorgt werden, daß sich hierbei die Wanddicke und/oder der Durchmesser des Kabels nicht ändert. Eine rasche Verringerung der Drehzahl des Extruders führt nicht zu einer analogen raschen Reduzierung des Ausstoßvolumens pro Zeiteinheit. Es besteht daher die Gefahr einer sogenannten Überwanddicke. Umgekehrt kann ein Extruder bei der sprunghaften Heraufsetzung seiner Drehzahl nicht unmittelbar mit einer entsprechenden Ausstoßleistung "antworten", wodurch eine Unterwanddicke die Folge ist. Im Stand der Technik behilft man sich etwa damit, daß sowohl die Extruderdrehzahl als auch die Liniengeschwindigkeit so langsam geändert werden, daß das dynamische Verhalten des Extruders keine Rolle mehr spielt. Dabei ist jedoch zu beachten, daß das Verhältnis aus Liniengeschwindigkeit und Extruderdrehzahl zur Einhaltung einer Soll-Wanddicke im statischen Betrieb aufgrund der Nichtlinearität des Extruders bei verschiedenen Liniengeschwindigkeiten entsprechend zu ändern ist.

Eine Ausgestaltung der Erfindung sieht vor, das dynamische Verhalten, also das Verhalten der Extrderausstoßleistung bei einer schnellen Schneckendrehzahländerung, zu erfassen und zu modellieren. Die Ausstoßleistung verhält sich bei einer Drehzahländerung ähnlich einem Tiefpass n-ter Ordnung. Die Parameter eines solchen Tiefpass-Modells lassen sich über die Antwort des Extruders auf eine schnelle Drezahländerung (Sprungfunktion) bestimmen. Dieses Modell kann dann dazu dienen, der Liniengeschwindigkeit das gleiche dynamische Verhalten über eine Steuerung aufzuprägen, um so im dynamischen Betrieb das verzögerte Verhalten des Extruders so zu kompensieren, daß die Wanddicke oder der Durchmesser im wesentlichen konstant bleibt. Damit wird die Gefahr einer Über- und Unterwanddicke eliminiert.

Mit Hilfe des erfindungsgemäßen Verfahrens kann daher auch das dynamische Verhalten eines Extruders in die Steuerung und Regelung der Wanddicke bzw. des Durchmessers auf einfache Weise einbezogen werden.

Die Erfindung wird nachfolgend anhand eines in Zeichnungen dargestellten Ausführungsbeispiels näher erläutert.

Fig. 1    zeigt schematisch eine Anlage zur Herstellung eines Kabels.

Fig. 2    zeigt ein Blockschaltbild einer Anordnung zur Durchführung des erfindungsgemäßen Verfahrens.

Fig. 2a    zeigt ein Blockschaltbild ähnlich Fig. 2, wobei der Sollwert für die Liniengeschwindigkeit prognostiziert wird.

Fig. 3    zeigt ein Blockschaltbild einer Steuerung und einer Regelung für die Anordnung nach Fig. 2.

Fig. 4    zeigt das Blockschaltbild nach Fig. 3 für einen manuellen Betrieb.

Fig. 5    zeigt das Blockschaltbild nach Fig. 3 für einen automatischen Betrieb.

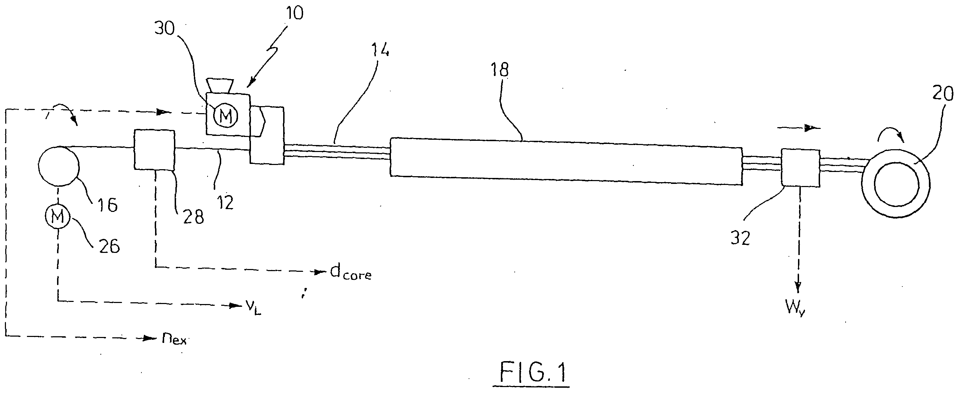

In Fig. 1 ist ein Extruder 10 dargestellt, mit Hilfe dessen eine Kunststoffummantelung auf einen Leiter 12 zur Herstellung eines Kabels 14 vorgenommen wird. Der Leiter 12 (Kern) wird mit Hilfe einer Abzugsvorrichtung 16 von einer nicht gezeigten Vorratstrommel abgewickelt. Das Kabel 14 wird durch eine Kühlstrecke 18 geschickt und kommt gekühlt heraus und wird auf eine Trommel 20 aufgewickelt. Zu diesem Zweck ist die Trommel 20 von einem Motor angetrieben. Die Abzugvorrichtung 16 bestimmt die Produktions- oder Liniengeschwindigkeit, die jedoch veränderbar ist. Dem Kern 12 ist mithin ein Meßkopf 26 zugeordnet, der die Liniengeschwindigkeit mißt. Zwischen Abzugsvorrichtung 16 und Extruder 10 ist ein weiterer Meßkopf 28 angeordnet, der den Durchmesser des Leiters 12 bzw. Kerns mißt. Der Durchmesser ist mit DCore bezeichnet. Dem Extruder 10 ist ein Meßkopf 30 zugeordnet, der die Drehzahl nex des Extruders 10 mißt. Hinter der Kühlstrecke 18 ist ein Meßkopf 32 angeordnet, der die Wanddicke Wv der Ummantelung, welche vom Extruder 10 auf den Leiter 12 aufgebracht wird, mißt. Hierfür kann ein geeignetes an sich bekanntes Röntgenmeßgerät verwendet werden. Um die Wanddicke zu messen kann auch eine Durchmesser-Messvorrichtung verwendet werden, weil etwa der Meßkopf 28 den Durchmesser des Leiters 12 mißt und die Wanddicke sich bekanntlich aus der Differenz von Durchmesser Kabel und Durchmesser Leiter ergibt.

Der Volumenausstoß pro Zeiteinheit (Ausstoßleistung) des Extruders 10 hängt bekanntlich u. a. von seiner Schneckendrehzahl ab. Die Wanddicke der Ummantelung des Kabels 14 hängt ferner von der Geschwindigkeit ab, mit der der Kern 12 durch den Extruder 10 geschickt wird sowie vom Durchmesser des Kerns 12. Bei gegebener Liniengeschwindigkeit VL kann daher mit vorgegebenem Kerndurchmesser die Wanddicke durch Veränderung der Schneckendrehzahl nex des Extruders 10 geändert werden.

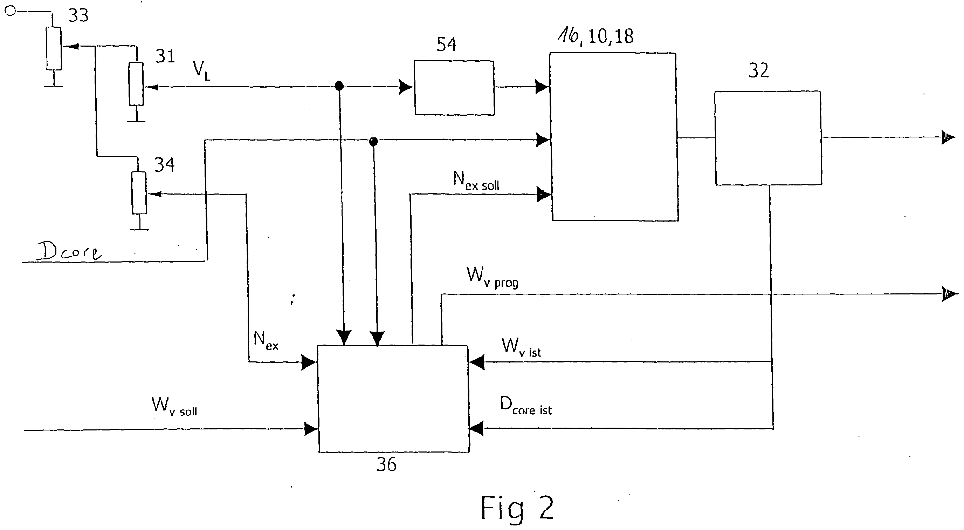

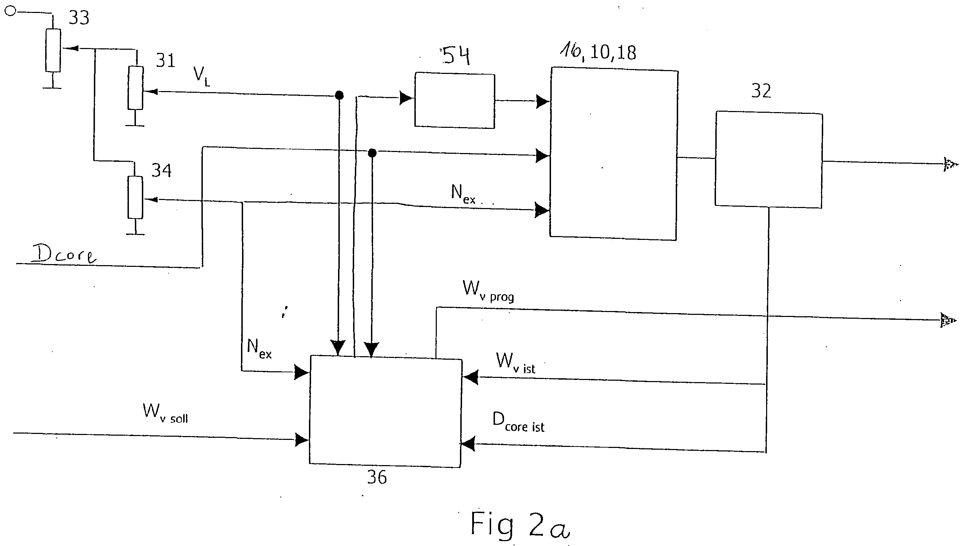

In der Anordnung nach Fig. 2 sind der Antrieb des Kabels 16, der Extruder 10 und die Kühlstrecke 18 nach Fig. 1 im Block gemeinsam angedeutet. Dieser schließt auch die in Fig. 1 nicht gezeigten Antriebe für den Abzug des Kabels ein. Ein erster Sollwertgeber 31 in Form eines Potentiometers gibt die Liniengeschwindigkeit vL vor. Ein zweiter Sollwertgeber 34 in Form eines Potentiometers gibt die Drehzahl (Schneckendrehzahl) für den Extruder vor. Die beiden Sollwertgeber 31, 34 sind über ein sogenanntes "Master-Potentiometer" 33 dahingehend veränderbar, daß ihr Verhältnis konstant bleibt. Die Drehzahl nex und die gewünschte Wanddicke für die Ummantelung des Kabels WVsoll wird auf einen "virtuellen Meßkopf" 36 gegeben, welcher auch den Meßwert für den Kerndurchmesser DCore sowie den Wert für die Liniengeschwindigkeit VL erhält. Wie nachfolgend noch erläutert wird, enthält der virtuelle Meßkopf 36 ein Modell des Extruders 10 sowie ggfs. eine Wanddickenregelung. Letztere wird ebenfalls nachfolgend näher erläutert. Der virtuelle Meßkopf 36 erzeugt rechnerisch einen Drehzahl-Sollwert für den Extruder nexsoll als Stellwert für den Extruder 10, alternativ gemäß Bild 2a erzeugt der virtuelle Meßkopf 36 rechnerisch einen Sollwert vexsoll als Stellwert für die Liniengeschwindigkeit über den Antrieb 16. Der virtuelle Meßkopf 36 erzeugt außerdem einen Anzeigewert für die Wanddicke der Ummantelung, die aufgrund der im virtuellen Meßkopf vorhandenen und eingegebenen Daten prognostiziert wird. Dieser ist in Fig. 2 mit WVprog bezeichnet. Der Linienführer kann auf seinem Anzeigetableau diesen Wert ablesen. Er liegt relativ nahe an dem endgültigen Sollwert für die Wanddicke WVsoll. Der Meßkopf 32 mißt jedoch die tatsächlich erzeugte Wanddicke und gibt sie auf den virtuellen Meßkopf 36. Der Unterschied von gemessener und vorhergesagter Wanddicke (WVsoll - WVist) wird dazu verwendet, den Extruder 10 oder die Liniengeschwindigkeit über den Antrieb 16 zu regeln oder das Extrudermodell im virtuellen Meßkopf 36 entsprechend zu adaptieren.

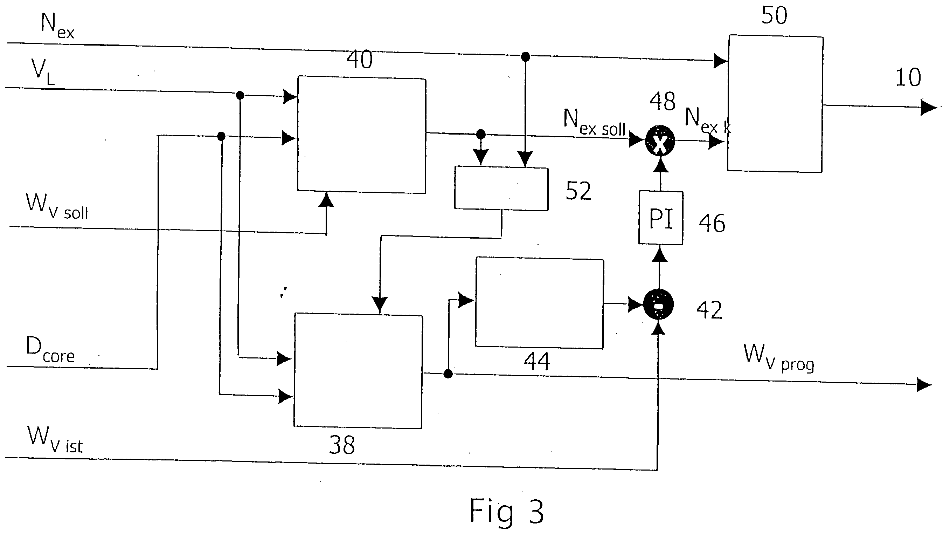

Die Regelung des Extruders und das Adaptieren des Extrudermodells wird nachfolgend anhand der Figuren 3 bis 5 näher erläutert.

Der virtuelle Meßkopf 36 nach Fig. 3 enthält ein Extrudermodell 38 und ein inverses Extrudermodell 40. In das Extrudermodell 38 gehen die Daten für die Liniengeschwindigkeit VL, den Kerndurchmesser Dcore und entweder ein Sollwert für die Drehzahl des Extruders nexsoll oder die Drehzahl des Extruders nex. In das inverse Extrudermodell 40 gehen die Werte für die Liniengeschwindigkeit VL, die Sollwanddicke WVsoll und der Kerndurchmesser DCore. Die Extrudermodelle 38, 40 bilden die Abhängigkeit des Volumenausstoßes pro Zeiteinheit (Ausstoßleistung) von der Extruderdrehzahl und der Liniengeschwindigkeit ab. Bei Berücksichtigung des Kerndurchmessers DCORE ergibt sich daraus eine Wanddicke, die der Extruder 10 erzeugen müßte, wenn man seine Produktions- bzw. Kenndaten zugrundelegt. Die Kennlinie für das Verhältnis von Volumenausstoß in Abhängigkeit der Extruderdrehzahl ist eine maschinen- und materialtypische Größe. Entspricht der Output der Maschine dem errechenbaren Verhalten, ist die Wanddicke ebenfalls errechenbar und damit einstellbar. Dies ist naturgemäß in der Praxis nicht der Fall. Gleichwohl ist es möglich, die prognostizierbare Wanddicke der Ummantelung zu bestimmen, was mit Hilfe des Extrudermodells 38 geschieht. Mit Hilfe des inversen Extrudermodells 40 wird diejenige Drehzahl nexsoll ermittelt, mit welcher der Extruder betrieben werden muß, um bei vorgegebener Liniengeschwindigkeit den Soll-Wanddickenwert zu erzeugen. In einer Vergleichsvorrichtung 42 wird die vom Meßkopf 32 gemessene Wanddicke der Ummantelung mit dem prognostizierten Wanddickenwert WVprog verglichen. Der Meßkopf 32 mißt die Wanddicke der Ummantelung im mehr oder weniger großen Abstand vom Ausgang des Extruders. Ein Schieberegister 44 überträgt den prognostizierten Wanddickenwert WVprog zeitverzögert auf die Vergleichsvorrichtung 42, so daß der Wanddickenvergleich am gleichen Ort des Kabels stattfindet, nämlich am Ort des Meßkopfs, wenn ein prognostizierter Wert am Ausgang des Extruders verzögert am Meßkopf 32 angekommen ist. Ein PI-Regler 46 erzeugt aus der Differenz einen Korrekturwert, der bei 48 den Sollwert nexsoll des inversen Extrudermodells 40 korrigiert. Der korrigierte Sollwert nexk wird dann über einen Schalter 50 auf die Stelleinrichtung für die Drehzahl des Extruders gegeben. Mit Hilfe des Schalters 40 kann wahlweise der korrigierte Drehzahlwert auf den Extruder gegeben werden oder unmittelbar der vom Linienführer vorgegebene Drehzahl-Sollwert nex. Ein Schalter 52 gibt wahlweise den erwähnten Drehzahlwert nex oder den vom inversen Extrudermodell 40 ermittelten Drehzahl-Sollwert nexsoll auf das Extrudermodell 38.

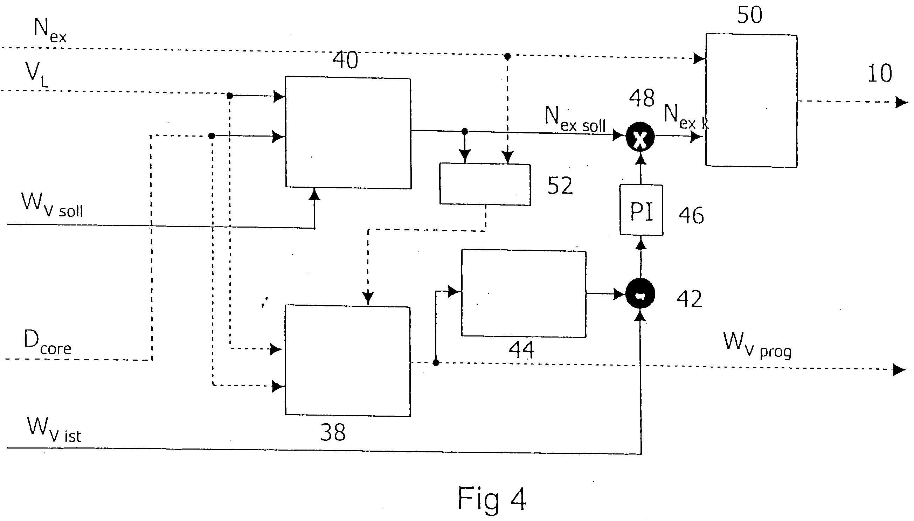

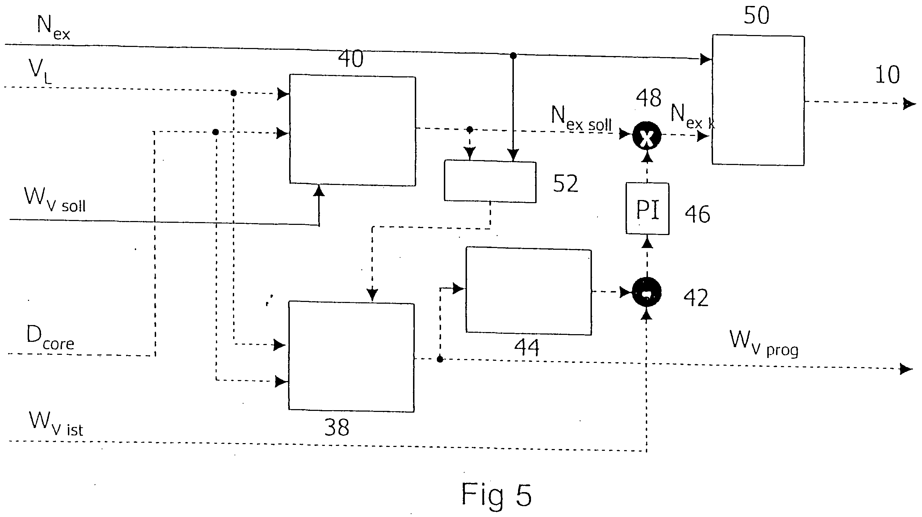

In Fig. 4 ist die gleiche Anordnung wie in Fig. 3 dargestellt, wobei anhand der gestrichelt gezeichneten Wirkungslinien der manuelle Betrieb der Produktionsanlage angedeutet werden soll. Ein manueller Betrieb erfolgt vorwiegend während des Anfahrens der Produktionsanlage bei geringer Liniengeschwindigkeit. Der vom Sollwertgeber 34 (Fig. 2) vorgegebene Sollwert, der vom Linienführer eingestellt wird, gelangt unmittelbar über den Schalter 50 auf den Extruder 10. Gleichzeitig gibt der Linienführer über den Sollwertgeber 31 (Fig. 2) die Liniengeschwindigkeit vor. Mit Hilfe des Extrudermodells 38 wird aufgrund der genannten Daten der prognostizierte Wanddickenwert errechnet und auf einer nicht gezeigten Anzeige wiedergegeben. Der Linienführer kann daher von Anfang an erkennen, welchen Wert die Wanddicke bei den angegebenen Daten annimmt. Aufgrund seiner Erfahrung weiß der Linienführer in etwa, welche Drehzahl und welche Liniengeschwindigkeit eingestellt werden müssen, um einen gewünschten Wanddickenwert WVsoll zu erzielen. Die Anzeige zeigt ihm dabei den prognostizierten Wert der Wanddicke. Durch Änderung des von ihm vorgegebenen Sollwerts für den Extruder nex kann er den prognostizierten Wanddickenwert WVprog dem Wanddicken-Sollwert WVsoll annähern. Sobald die Anlage eingerichtet ist, kann der Linienführer die Produktionsanlage auf automatischen Betrieb umstellen und die Liniengeschwindigkeit auf Produktionsgeschwindigkeit hochfahren. Der Betrieb in Automatik ist in Fig. 5 wiedergegeben.

Durch Umschaltung des Schalters 50 ist der Drehzahl-Sollwertgeber 34 wirkungslos. In Fig. 5 geben die gestrichelten Wirkungslinien die Betriebsweise wieder. Wie schon erwähnt, errechnet das inverse Extrudermodell 40 aus der Liniengeschwindigkeit VL, dem Kerndurchmesser DCore und der Sollwanddicke WVsoll einen Sollwert nexsoll für den Extruder. Dieser gelangt über den umgeschalteten Schalter 52 auch auf das Extrudermodell 38, das aus diesem Wert und der Liniengeschwindigkeit sowie dem Kerndurchmesser die prognostizierte Wanddicke WVprog ermittelt. Diese gelangt auch über das Schieberegister 44 auf die Vergleichsvorrichtung 42. Der Extruder 10 wird daher zunächst mit einem Drehzahl-Sollwert gesteuert, der mit Hilfe des virtuellen Meßkopf bestimmt wird. Dieser mag nicht exakt dem gewünschten Wanddickenwert entsprechen, liegt jedoch sehr nahe an dem gewünschten Wert. Daher muß nicht gewartet werden, bis der Ausgang des Extruders den Meßkopf 32 erreicht. Hierfür ist eine Strecke von z.B. mehr als 100 m erforderlich. Wird der Meßkopf erreicht, kann eine Regelung einsetzen, indem der gemessene Wanddickenwert WVist mit dem prognostizierten Wanddickenwert WVprog verglichen wird und zwar am Ort des Meßkopfes 32. Die Differenz gelangt über den Regler 46 auf eine Korrekturstufe 48, in der der prognostizierte Drehzahl-Sollwert nexsoll korrigiert wird, um den Wanddicken-Istwert an den Wanddicken-Sollwert endgültig heranzubringen. Diese Korrektur ist jedoch relativ gering, weil bereits der prognostizierte Wanddickenwert WVprog dem Wanddicken-Sollwert weitgehend angenähert ist. Ebenfalls möglich ist die Realisierung der Korrektur über eine Adaption der dem Extrudermodell und dem inversen Extrudermodell zugrunde liegenden Ausstoßleistung des Extruders.

Analog zum soeben beschriebenen Verfahren, kann natürlich auch die Schneckendrehzahl des Extruders als Leitwert benutzt werden und das Extrudermodell prognostiziert die Liniengeschwindigkeit. Abweichungen zwischen der Ist-Wanddicke und der prognostizierten Wanddicke regeln die Schneckendrehzahl des Extruders und/oder die Abzugsgeschwindigkeit oder es erfolgt eine Korrektur des Extrudermodells.

Wanddickenwerte lassen sich bei Kenntnis des Kerndurchmessers einfach umrechnen in Durchmesserwerte, falls solche Anzeigewerte oder Regelungen gefordert sind.

In der Anordnung nach Fig. 2a sind der Antrieb des Kabels 16, der Extruder 10 und die Kühlstrecke 18 nach Fig. 1 im Block gemeinsam andeutet. Ein erster Sollwertgeber 31 in Form eines Potentiometers gibt die Liniengeschwindigkeit vL vor. Ein zweiter Sollwertgeber 34 in Form eines Potentiometers gibt die Drehzahl (Schneckendrehzahl) für den Extruder vor. Die beiden Sollwertgeber 31, 34 sind über ein sogenanntes "Master-Potentiometer" 33 dahingehend veränderbar, daß ihr Verhältnis konstant bleibt. Die Drehzahl nex und die gewünschte Wanddicke für die Ummantelung des Kabels WVsoll wird auf einen "virtuellen Meßkopf 36 gegeben, welcher auch den Meßwert für den Kerndurchmesser DCore sowie den Wert für die Liniengeschwindigkeit VL erhält. Wie nachfolgend noch erläutert wird, enthält der virtuelle Meßkopf 36 ein Modell des Extruders 10 sowie ggf. eine Wanddickenregelung. Letztere wird ebenfalls nachfolgend näher erläutert. Der virtuelle Meßkopf 36 erzeugt rechnerisch einen Sollwert vLsoll als Stellwert für die Liniengeschwindigkeit über den Antrieb 16. Der virtuelle Meßkopf 36 erzeugt außerdem einen Anzeigewert für die Wanddicke der Ummantelung, die aufgrund der im virtuellen Meßkopf vorhandenen und eingegebenen Daten prognostiziert wird.

Dieser ist in Fig. 2a mit WVprog bezeichnet. Der Linienführer kann auf seinem Anzeigetableau diesen Wert ablesen. Er liegt relativ nahe an dem endgültigen Sollwert für die Wanddicke WVsoll. Der Meßkopf 32 mißt jedoch die tatsächlich erzeugte Wanddicke und gibt sie auf den virtuellen Meßkopf 36. Der Unterschied von gemessener und vorhergesagter Wanddicke (WVsoll - WVist) wird dazu verwendet, die Liniengeschwindigkeit über den Antrieb 16 zu regeln oder das Extrudermodell im virtuellen Meßkopf 36 entsprechend zu adaptieren.

Wie in Fig. 2 und Fig. 2a dargestellt, wird die Vorgabe für die Liniengeschwindigkeit VL über einen Block 54 auf den Extruder 10 gegeben. Dieser Block 54 bewirkt, daß das dynamische Verhalten des Extruders der Liniengeschwindigkeit aufgeprägt und somit kompensiert wird. Wie weiter oben beschrieben, kann die gewünschte Wanddicke aufrechterhalten werden, wenn während einer Drehzahländerung am Extruder die Liniengeschwindigkeit entsprechend angepaßt wird. Auf diese Weise wird eine Über- oder Unterwandstärke während der Drehzahländerung vermieden. Drehzahländerungen treten z.B. auf, wenn die Kabelproduktion verlangsamt wird, um eine Aufwickeltrommel auszutauschen und das Kabel an eine neue Aufwickeltrommel anzuschließen. Während dieser Zeit wird das Kabel mit verringerter Geschwindigkeit z.B. in einen Speicher hinein produziert. Wird im Anschluß daran wieder auf die Produktionsgeschwindigkeit erhöht, tritt ebenfalls die Gefahr einer Wanddickenänderung ein, die dadurch kompensiert wird, daß die Liniengeschwindigkeit an die Ausstoßvolumenleistungsänderung angepaßt wird.

Das obige Ausführungsbeispiel bezieht sich auf eine Kabelherstellung. Die Erfindung kann in gleichem Maße auf die Herstellung beliebiger Stränge aus Kunststoff angewendet werden, die in einem Extruder extrudiert werden, z.B. Rohre oder Schläuche.

Statt eines Röntgenmeßgeräts 32 kann auch ein Durchmesser-Meßgerät verwendet werden.

**Patentansprüche**

1. Verfahren zum Betrieb einer Produktionsanlage zur Herstellung eines Stranges, bei dem in mindestens einem in seiner Schneckendrehzahl veränderbaren Extruder (10) mindestens eine Schicht des Stranges (14) aus Kunststoff extrudiert wird, wobei die Liniengeschwindigkeit $V_L$ des Stranges (14) veränderbar ist und bei dem ferner der Durchmesser D und/oder die Wanddicke $W_v$ der Schicht im Abstand vom Extruder mit einem Meßkopf (32) gemessen wird, **gekennzeichnet durch** folgende Schritte:

   - in einem Rechner wird für ein Extrudermodell (38) ein Algorithmus gespeichert, mit dem Durchmesserwerte D und/oder Wanddickenwerte $W_v$ der Schicht unter Berücksichtigung der nichtlinearen drehzahlabhängigen Ausstoßleistung des zum Einsatz kommenden spezifischen Extruders, des Innendurchmessers $D_{core}$ der Schicht und der Liniengeschwindigkeit $V_L$ berechnet werden,
   - das gespeicherte Extrudermodell (38) wird aus dem Volumenausstoß **durch** Messung der Wanddicke $W_v$ und/oder des Durchmessers eines Stranges (14), der Extruderdrehzahl $n_{ex}$, der Liniengeschwindigkeit $V_L$ und des Innendurchmessers $D_{core}$ der Schicht gebildet,
   - bei Produktionsbeginn des Stranges (14) wird zunächst mit Hilfe des Extrudermodells (38) der vom Extruder (10) vorhersehbar erzeugte Wert für Durchmesser und/oder Wanddicke $W_v$ errechnet in Abhängigkeit von den Werten für den Innendurchmesser $D_{core}$, die Liniengeschwindigkeit $V_L$, die Schneckendrehzahl $n_{ex}$ des Extruders (10) und die drehzahlabhängigen Daten für die Ausstoßleistung des Extruders C,
   - der errechnete, vorhersehbare Wert für Durchmesser- und/oder Wanddicke $W_{v\ prog}$ wird angezeigt und
   - **durch** Änderung der Schneckendrehzahl $n_{ex}$ des Extruders (10) und/oder der Liniengeschwindigkeit $V_L$ mittels Handbetätigung oder Regelung wird der errechnete und angezeigte Wert für Durchmesser und/oder Wanddicke $W_{v\ prog}$ auf einen Sollwert für Durchmesser und/oder Wanddicke $W_{v\ soll}$ gebracht.

2. Verfahren nach Anspruch 1, **dadurch gekennzeichnet, dass** die mindestens eine Schicht als Ummantelung auf einem Kern (12) eines Kabels (14) extrudiert wird, der mit Liniengeschwindigkeit $V_L$ durch den Extruder (10) geführt wird.

3. Verfahren nach Anspruch 1 oder 2, **dadurch gekennzeichnet, dass** in die Berechnung der Volumenausstoßleistung des Extruders (10) das Kunststoffmaterial, gegebenenfalls der Querschnitt der Schicht, gegebenenfalls die Massetemperatur, gegebenenfalls der Massedruck im Extruder (10), gegebenenfalls die Leistung des Extruderantriebs einbezogen wird.

4. Verfahren nach einem der Ansprüche 1 bis 3, **dadurch gekennzeichnet, dass** für das automatisch durchgeführte Verfahren im Rechner ein inverses Extrudermodell (40) gespeichert wird, in dem

   - die Relation von Drehzahl $n_{ex}$ des Extruders und dem erzielbaren Wert für den Durchmesser D und/oder die Wanddicke $W_v$ nach Maßgabe des Innendurchmessers $D_{core}$, der Liniengeschwindigkeit $V_L$ und der drehzahlabhängigen Ausstoßleistung des Extruders abgebildet ist,
   - die Antriebe für die Schneckendrehzahl $n_{ex}$ des Extruders und/oder der Liniengeschwindigkeit $V_L$ mit einem Sollwert $n_{ex\ soll}$, $V_{L\ soll}$ beaufschlagt werden, der im inversen Extrudermodell (40) für vorgegebene Werte von Wanddicke und/oder Durchmesser, Liniengeschwindigkeit und Innen- bzw. Kerndurchmesser errechnet wird,
   - mit dem Extrudermodell (38) aus dem Drehzahlsollwert $n_{ex\ soll}$ und der Liniengeschwindigkeit $V_{L\ soll}$ und dem Innendurchmesser $D_{core}$ der erzielbare Durchmesser und/oder die erzielbare Wanddicke $W_{v\ prog}$ errechnet wird,
   - der Messkopf (32) den Istwert für Durchmesser und/oder Wanddicke $W_{v\ ist}$ der Umhüllung misst,
   - der errechnete Wert für Durchmesser und/oder Wanddicke $W_{v\ prog}$ mit dem Istwert $W_{v\ ist}$ am Ort des Messkopfes (32) verglichen wird,

- mit der Abweichung des Istwerts vom Sollwert die Drehzahl des Extruders $n_{ex}$ und/oder die Liniengeschwindigkeit $V_L$ so geregelt oder das Extrudermodell (38) so angepasst wird, dass der Sollwert für Durchmesser D und/oder Wanddicke $W_{v\,soll}$ erreicht wird.

**5.** Verfahren nach Anspruch 4, **dadurch gekennzeichnet, dass** die im inversen Extrudermodell (40) errechneten Drehzahl- und/oder Liniengeschwindigkeits-Sollwerte $n_{ex\,soll}$ für Durchmesser und/oder Wanddicke $W_v$ mit der Abweichung von Soll- und Istwert von Durchmesser und/oder Wanddicke korrigiert werden.

**6.** Verfahren nach Anspruch 4 oder 5, **dadurch gekennzeichnet, dass** der errechnete Wert für Durchmesser und/oder Wanddicke in einem durch die Liniengeschwindigkeit $V_L$ gesteuerten Laufzeitspeicher (44) gegeben wird zwecks ortrichtigen Vergleichs mit einem vom Messkopf (32) gemessenen Istwert.

**7.** Verfahren nach Anspruch 6, **dadurch gekennzeichnet, dass** weitere prozeßrelevante Daten, wie Extruderdrehzahl, Abzugsgeschwindigkeit kontinuierlich einem von der Liniengeschwindigkeit gesteuerten Laufzeitspeicher zugeführt werden zum ortsrichtigen Vergleich mit vorher errechneten Werten und Basisdaten, auf denen die errechneten Werte beruhen, zwecks Ableitung eines Fehlersignals zur Korrektur des Extrudermodells und/oder der Sollwertvorgaben für die Extruderdrehzahl und/oder die Liniengeschwindigkeit.

**8.** Verfahren nach einem der Ansprüche 1 bis 7, **dadurch gekennzeichnet, dass** die zeitliche Änderung der Wanddicke $W_v$ oder des Durchmessers D bei einer Änderung der Drehzahl $n_{ex}$ des Extruders (10) ermittelt und ein erster funktionaler Zusammenhang hergestellt wird, aus dem ein zweiter funktionaler Zusammenhang ermittelt und im Rechner gespeichert wird derart, dass die Liniengeschwindigkeit $V_L$ nach Maßgabe des zweiten funktionalen Zusammenhangs so gesteuert wird, dass die Wanddicke $W_v$ bzw. der Durchmesser D konstant bleibt.

**9.** Verfahren nach einem der Ansprüche 1 bis 8, **dadurch gekennzeichnet, dass** Innendurchmesser $D_{core}$ und/oder Wanddicke $W_v$ und/oder der Außendurchmesser D mit einem Röntgenmessgerät gemessen wird.

**10.** Verfahren nach einem der Ansprüche 2 bis 9, **dadurch gekennzeichnet, dass** ein Messkopf (28) den Kerndurchmesser $D_{core}$ misst und der Wert für den Kerndurchmesser $D_{core}$ in das Extrudermodell (38) bzw. das inverse Extrudermodell (40) einfließt.

**Claims**

**1.** Method for the operation of a production plant to produce an extrudate, in which at least one layer of the extrudate (14) is extruded from plastic material in at least one extruder (10) which is variable in the rotational speed of its screw, wherein the line speed $V_L$ of the extrudate (14) is variable and in which further the diameter D and/or the wall thickness $W_v$ of the layer is measured by a measuring head (32) in a distance from the extruder, characterised through the following steps:

    - an algorithm is memorised in a computer for an extruder model (38) for calculating diameter values D and/or wall thickness values $W_v$ of the layer, taking into account the non-linear rotational speed dependent output capacity of the extruder, the inside diameter $D_{core}$ of the layer and the line speed $V_L$,
    - the memorised extruder model (38) is compiled from the volume output by measuring the wall thickness $W_v$ and/or the diameter of an extrudate (14), the extruder's rotational speed $n_{ex}$, the line speed $V_L$ and the inside diameter $D_{core}$,
    - when starting production of the extrudate (14), the value for diameter and/or wall thickness $W_v$ predictably generated by the extruder (10) is calculated in the extruder model (38) dependent on the values of the inside diameter $D_{core}$, the line speed $V_L$, the rotational speed $n_{ex}$ of the screw of the extruder (10), and the data for the output capacity of the extruder C that depend on the rotational speed,
    - the calculated, predictable value for diameter and/or wall thickness $W_{v,\,prog}$ is displayed, and
    - by changing the rotational speed $n_{ex}$ of the screw of the extruder (10) and/or the line speed $V_L$ via manual actuation or regulation, the calculated and displayed value for diameter and/or wall thickness $W_{v,\,prog}$ is brought to a desired value for diameter and/or wall thickness $W_{v,\,soll}$.

**2.** Method according to claim 1, **characterised in that** the at least one layer is extruded as a sheathing on a core (12) of a cable (14) which is guided through the extruder (10) with the line speed $V_L$.

**3.** Method according to claim 1 or 2, **characterised in that** the plastic material, if necessary the cross sectional area of the layer, if necessary the mass temperature, if necessary the mass pressure in the extruder (10), if necessary the power of the extruder drive is involved in the calculation of the volume output capacity of the extruder.

**4.** Method according to any one of claims 1 to 3, **characterised in that** an inverse extruder model (40) is memorised in the computer for the automatically performed method, in which

- the relation of the extruder's rotational speed $n_{ex}$ and the achievable value for the diameter D and/or the wall thickness $W_v$ is mapped in accordance with the inside diameter $D_{core}$, the line speed $V_L$ and the rotational speed dependent output capacity of the extruder,
- a desired value $n_{ex, soll}$, $V_{L, soll}$ for the rotational speed $n_{ex}$ of the screw of the extruder and/or for the line speed $V_L$ is delivered to the respective drives, which is calculated in the inverse extruder model (40) for preset values of wall thickness and/or diameter, line speed and inside or core diameter, respectively,
- the achievable diameter and/or the achievable wall thickness $W_{v, prog}$ is calculated with the extruder model (38) from the desired value $n_{ex, soll}$ of the rotational speed and the line speed $V_L$ and the inner diameter $D_{core}$,
- the measuring head (32) measures the real value for diameter and/or wall thickness $W_{v, ist}$ of the sheathing,
- the calculated value for diameter and/or wall thickness $W_{v, prog}$ is compared with the real value $W_{v, ist}$ on the location of the measuring head,
- with the deviation of the real value from the desired value, the rotational speed $n_{ex}$ of the extruder and/or the line speed $V_L$ is regulated such or the extruder model (38) is customised such that the desired value for diameter D and/or wall thickness $W_{v, soll}$ is achieved.

5. Method according to claim 4, **characterised in that** the desired values for rotational speed $n_{ex, soll}$ and/or line speed calculated in the inverse extruder model (40) for diameter and/or wall thickness $W_v$ are corrected by way of the deviation between desired value and real value of diameter and/or wall thickness.

6. Method according to claim 4 or 5, **characterised in that** the calculated value for diameter and/or wall thickness is input into a delay line memory (44) controlled by the line speed $V_L$ for the sake of location-adjusted comparison with a real value measured by the measuring head (32).

7. Method according to claim 6, **characterised in that** further process relevant data, like the extruder's rotational speed and the haul-off speed are continuously fed into a delay line memory controlled by the line speed, for location-adjusted comparison with previously calculated values and basic data on which the calculated data are based, for the sake of deriving an error signal for the correction of the extruder model and/or the desired value presettings for the extruder's rotational speed and/or the line speed.

8. Method according to any one of claims 1 to 7, **characterised in that** the change in time of the wall thickness $W_v$ or the diameter D is determined when there is a change of the rotational speed $n_{ex}$ of the extruder, and a first functional correlation is generated from which a second functional correlation is determined and memorised in the computer, such that the line speed $V_L$ is controlled in accordance with the second functional correlation so that the wall thickness $W_v$ or the diameter D, respectively, remains constant.

9. Method according to any one of claims 1 to 8, **characterised in that** inside diameter $D_{core}$ and/or wall thickness $W_v$ and/or the external diameter D is measured with an x-ray measuring device.

10. Method according to any one of claims 2 to 9, **characterised in that** a measuring head (28) measures the core diameter $D_{core}$, and the value for the core diameter $D_{core}$ is incorporated into the extruder model (38) or the inverse extruder model (40), respectively.

## Revendications

1. Procédé de conduite d'une installation de production destiné à fabriquer un barreau, dans lequel au moins une couche du barreau (14) en matière synthétique est extrudée dans au moins une extrudeuse (10) dont la vitesse de rotation de vis est modifiable, la vitesse linéaire $V_L$ du barreau (14) étant modifiable, et dans lequel en outre le diamètre D et/ou l'épaisseur de paroi $W_v$ de la couche à distance de l'extrudeuse est mesurée avec une tête de mesure (32), **caractérisé par** les étapes suivantes :

- un algorithme est enregistré dans un calculateur pour un modèle d'extrudeuse (38), avec lequel des valeurs de diamètre D et/ou des valeurs d'épaisseur de paroi $W_v$ de la couche sont calculées en prenant en compte la capacité d'expulsion non linéaire, qui est fonction de la vitesse de rotation, de l'extrudeuse spécifique utilisée, le diamètre intérieur $D_{core}$ de la couche et la vitesse linéaire $V_L$,
- le modèle d'extrudeuse (38) enregistré est formé à partir de l'expulsion en volume par la mesure de l'épaisseur de paroi $W_v$ et/ou du diamètre d'un barreau (14), de la vitesse de rotation de l'extrudeuse $n_{ex}$, de la vitesse linéaire $V_L$ et du diamètre intérieur $D_{core}$ de la couche,
- lors du début de la production du barreau (14), à l'aide du modèle d'extrudeuse (38), la valeur produite de façon prévisible par l'extrudeuse (10) pour le diamètre et/ou pour l'épaisseur de paroi $W_v$ est d'abord calculée en fonction des valeurs du diamètre intérieur $D_{core}$, de la vitesse linéaire $V_L$, de la vitesse de rotation de vis $n_{ex}$ de l'extrudeuse (10) et des données, qui sont fonction de la vitesse de rotation, de la capacité d'expulsion de l'extrudeuse C,

- la valeur prévisible calculée pour le diamètre et/ou l'épaisseur de paroi $W_{v\,prog}$ est affichée et/ou

- par la modification de la vitesse de rotation de vis $n_{ex}$ de l'extrudeuse (10) et/ou de la vitesse linéaire $V_L$ au moyen d'un actionnement manuel ou d'une régulation, la valeur calculée et affichée pour le diamètre et/ou l'épaisseur de paroi $W_{v\,prog}$ est amenée à une valeur de consigne pour le diamètre et/ou l'épaisseur de paroi $W_{v\,soll}$.

2. Procédé selon la revendication 1, **caractérisé en ce que** la couche au moins au nombre de un est extrudée en tant que revêtement sur une âme (12) d'un câble (14) qui est conduite à travers l'extrudeuse (10) à la vitesse linéaire $V_L$.

3. Procédé selon la revendication 1 ou 2, **caractérisé en ce que** la matière synthétique, éventuellement la section transversale de la couche, éventuellement la température de la masse, éventuellement la pression de masse dans l'extrudeuse (10), éventuellement la puissance de l'entraînement de l'extrudeuse sont intégrées dans le calcul de la capacité d'expulsion en volume de l'extrudeuse (10).

4. Procédé selon l'une des revendications 1 à 3, **caractérisé en ce que**, pour le procédé effectué automatiquement, il est enregistré dans le calculateur un modèle d'extrudeuse inverse (40) dans lequel

    - la relation de la vitesse de rotation $n_{ex}$ de l'extrudeuse et de la valeur atteignable pour le diamètre D et/ou l'épaisseur de paroi $W_v$ est représentée conformément au diamètre intérieur $D_{core}$, à la vitesse linéaire $V_L$ et à la capacité d'expulsion, qui est fonction de la vitesse de rotation, de l'extrudeuse,

    - les entraînements pour la vitesse de rotation de vis $n_{ex}$ de l'extrudeuse et/ou la vitesse linéaire $V_L$ sont soumis à une valeur de consigne $n_{ex\,soll}$, $VL_{soll}$ qui est calculée dans le modèle d'extrudeuse inverse (40) pour des valeurs prédéfinies d'épaisseur de paroi et/ou de diamètre, de vitesse linéaire et de diamètre intérieur ou respectivement de diamètre d'âme,

    - le diamètre atteignable et/ou l'épaisseur de paroi $W_{v\,prog}$ atteignable est calculé(e) avec le modèle d'extrudeuse (38) à partir de la valeur de consigne de vitesse de rotation $n_{ex\,soll}$ et de la vitesse linéaire $V_{L\,soll}$ et du diamètre intérieur $D_{core}$,

    - la tête de mesure (32) mesure la valeur effective du diamètre et/ou de l'épaisseur de paroi $W_{v\,ist}$ de l'enveloppe,

    - la valeur calculée pour le diamètre et/ou l'épaisseur de paroi $W_{v\,prog}$ est comparée à la valeur effective $W_{v\,ist}$ à l'emplacement de la tête de mesure (32),

    - la vitesse de rotation de l'extrudeuse $n_{ex}$ et/ou la vitesse linéaire $V_L$ est régulée, ou le modèle d'extrudeuse (38) est adapté, avec la divergence de la valeur effective par rapport à la valeur de consigne de telle sorte que la valeur de consigne du diamètre D et/ou de l'épaisseur de paroi $W_{v\,soll}$ est atteinte.

5. Procédé selon la revendication 4, **caractérisé en ce que** les valeurs de consigne de la vitesse de rotation et/ou de la vitesse linéaire $n_{ex\,soll}$ calculées dans le modèle d'extrudeuse inverse (40) pour le diamètre et/ou l'épaisseur de paroi $W_v$ sont corrigées avec la divergence de la valeur de consigne par rapport à la valeur effective du diamètre et/ou de l'épaisseur de paroi.

6. Procédé selon la revendication 4 ou 5, **caractérisé en ce que** la valeur calculée pour le diamètre et/ou l'épaisseur de paroi est donnée dans une mémoire de durée de marche (44) commandée par la vitesse linéaire $V_L$ en vue d'une comparaison, correcte quant à l'emplacement, avec une valeur effective mesurée par la tête de mesure (32).

7. Procédé selon la revendication 6, **caractérisé en ce que** d'autres données pertinentes pour le processus, telles que la vitesse de rotation de l'extrudeuse, la vitesse d'extraction, sont conduites en continu à une mémoire de durée de marche commandée par la vitesse linéaire pour la comparaison, correcte quant à l'emplacement, avec des valeurs calculées antérieurement et des données de base sur lesquelles reposent les valeurs calculées afin d'en dériver un signal d'erreur pour la correction du modèle d'extrudeuse et/ou des valeurs de consigne prescrites pour la vitesse de rotation de l'extrudeuse et/ou la vitesse linéaire.

8. Procédé selon l'une des revendications 1 à 7, **caractérisé en ce que** la modification dans le temps de l'épaisseur de paroi $W_v$ ou du diamètre D est déterminée pour une modification de la vitesse de rotation $n_{ex}$ de l'extrudeuse (10), et un premier rapport fonctionnel est établi, à partir duquel un deuxième rapport fonctionnel est déterminé et est enregistré dans le calculateur de telle sorte que la vitesse linéaire $V_L$ est commandée conformément au deuxième rapport fonctionnel de telle sorte que l'épaisseur de paroi $W_v$ ou respectivement le diamètre D demeure constant(e).

**9.** Procédé selon l'une des revendications 1 à 8, **caractérisé en ce que** le diamètre intérieur $D_{core}$ et/ou l'épaisseur de paroi $W_v$ et/ou le diamètre extérieur D est mesuré(e) avec un appareil de mesure par rayons X.

**10.** Procédé selon l'une des revendications 2 à 9, **caractérisé en ce qu'**une tête de mesure (28) mesure le diamètre d'âme $D_{core}$, et **en ce que** la valeur du diamètre d'âme $D_{core}$ est intégrée dans le modèle d'extrudeuse (38) ou respectivement dans le modèle d'extrudeuse inverse (40).

FIG.1

Fig 2

EP 2 086 744 B1

Fig 2a

Fig 3

Fig 4

EP 2 086 744 B1

EP 2 086 744 B1

Fig 5

**IN DER BESCHREIBUNG AUFGEFÜHRTE DOKUMENTE**

**In der Beschreibung aufgeführte Patentdokumente**

- EP 0400310 A2
- EP 0635851 A2
- JP 62177810 A